(19) Europäisches Patentamt
European Patent Office
Office européen des brevets

(11) **EP 2 869 997 B1**

(12) **EUROPÄISCHE PATENTSCHRIFT**

(45) Veröffentlichungstag und Bekanntmachung des Hinweises auf die Patenterteilung:
**14.09.2016   Patentblatt 2016/37**

(21) Anmeldenummer: **13736761.1**

(22) Anmeldetag: **28.06.2013**

(51) Int Cl.:
*B42D 25/29* (2014.01)        *B42D 25/30* (2014.01)
*G07D 7/00* (2016.01)          *G07D 7/12* (2016.01)
*B41M 3/14* (2006.01)          *G01N 21/64* (2006.01)
*D21H 21/48* (2006.01)

(86) Internationale Anmeldenummer:
**PCT/EP2013/001905**

(87) Internationale Veröffentlichungsnummer:
**WO 2014/005686 (09.01.2014 Gazette 2014/02)**

(54) **WERTDOKUMENT, VERFAHREN ZUR ÜBERPRÜFUNG DES VORLIEGENS DESSELBEN UND WERTDOKUMENTSYSTEM**

VALUE DOCUMENT, METHOD FOR CHECKING THE PRESENCE OF SAME AND VALUE DOCUMENT SYSTEM

DOCUMENT DE VALEUR, PROCÉDÉ DE CONTRÔLE DE LA PRÉSENCE DUDIT DOCUMENT DE VALEUR ET SYSTÈME DE DOCUMENTS DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2012   DE 102012013244**

(43) Veröffentlichungstag der Anmeldung:
**13.05.2015   Patentblatt 2015/20**

(73) Patentinhaber: **Giesecke & Devrient GmbH**
**81677 München (DE)**

(72) Erfinder:
• **KECHT, Johann**
  **81677 München (DE)**
• **RAUSCHER, Wolfgang**
  **94365 Parkstetten (DE)**
• **STEINLEIN, Stephan**
  **80538 München (DE)**

(56) Entgegenhaltungen:
EP-A2- 1 826 730          WO-A2-2006/053685
DE-A1-102004 027 416     DE-A1-102005 019 980
DE-A1-102005 047 609     US-A- 4 863 783

**Beschreibung**

Die Erfindung betrifft ein Wertdokument wie eine Banknote, ein Verfahren zum Überprüfen des Vorliegens desselben und ein Wertdokumentsystem.

Die Echtheitssicherung von Wertdokumenten mittels lumineszierender Substanzen ist seit langem bekannt. Bevorzugt werden mit Seltenerdmetallen dotierte Wirtsgitter eingesetzt, wobei durch geeignete Abstimmung von Seltenerdmetall und Wirtsgitter die Absorptions- und Emissionsbereiche in einem breiten Bereich variiert werden können. Auch die Verwendung magnetischer und elektrisch leitfähiger Materialien zur Echtheitssicherung ist an sich bekannt. Magnetismus, elektrische Leitfähigkeit und Lumineszenzemission sind durch im Handel verfügbare Messgeräte maschinell nachweisbar, Lumineszenz bei Emission im sichtbaren Bereich in ausreichender Intensität auch visuell.

Praktisch ebenso alt wie die Echtheitssicherung von Wertdokumenten ist die Problematik der Fälschung der Echtheitsmerkmale der Wertdokumente. Die Fälschungssicherheit kann beispielsweise dadurch erhöht werden, dass nicht nur ein Merkmalsstoff, sondern mehrere Merkmalsstoffe in Kombination verwendet werden, beispielsweise ein lumineszierender Stoff und ein magnetischer Stoff, oder ein lumineszierender Stoff und ein die Lumineszenzeigenschaften beeinflussender Stoff. Die DE 10 2005 047 609 A1 beschreibt Merkmalsstoffe zur Echtheitssicherung von Wertdokumenten, die einen Lumineszenzstoff und mindestens einen weiteren Stoff, der auch ein Lumineszenzstoff sein kann, aber bevorzugt magnetisch oder elektrisch leitfähig ist, enthalten. Der Lumineszenzstoff liegt in Partikelform vor und wird von einer aus Nanopartikeln gebildeten Hülle umgeben. Die Eigenschaften des Merkmalsstoffes ergeben sich aus dem Zusammenwirken der Lumineszenzemissionseigenschaften des Lumineszenzstoffes und der Eigenschaften der Nanopartikel.

Ausgehend von diesem Stand der Technik liegt der vorliegenden Erfindung die Aufgabe zugrunde, ein mit Bezug auf die Fälschungssicherheit verbessertes Wertdokument sowie ein Verfahren zum Überprüfen des Vorliegens desselben bereitzustellen.

Zusammenfassung der Erfindung

Ein erster Aspekt der Erfindung betrifft ein Wertdokument mit den Merkmalen des Anspruchs 1.

Es wird bevorzugt, dass die für die Auswertung herangezogenen Lumineszenzintensitäten jeweils mittels eines Algorithmus umgerechnete, korrigierte Messwerte sind.

Des Weiteren wird bevorzugt, dass die Agglomerate von der Gruppe bestehend aus Kern/Hülle-Teilchen, Pigmentagglomeraten, verkapselten Pigmentagglomeraten und von Nanopigmenten umhüllten Pigmenten gewählt sind.

Weiterhin wird bevorzugt, dass die partikulären Agglomerate eine Korngröße D99 in einem Bereich von 1 Mikrometer bis 30 Mikrometer, weiter bevorzugt in einem Bereich von 5 Mikrometer bis 20 Mikrometer, noch weiter bevorzugt in einem Bereich von 10 Mikrometer bis 20 Mikrometer und insbesondere bevorzugt in einem Bereich von 15 Mikrometer bis 20 Mikrometer, aufweisen.

Zusätzlich oder alternativ zu den vorangehend beschriebenen Werten der Korngröße D99 wird weiterhin bevorzugt, dass die partikulären Agglomerate eine Korngröße D50 in einem Bereich von 1 Mikrometer bis 30 Mikrometer, weiter bevorzugt in einem Bereich von 5 Mikrometer bis 20 Mikrometer und insbesondere bevorzugt in einem Bereich von 7,5 Mikrometer bis 20 Mikrometer, aufweisen.

D99 und D50 bezeichnen dabei, dass 99% bzw. 50% der Partikel einer Korngrößenverteilung Korngrößen aufweisen, die kleiner oder gleich diesem Wert sind.

Ein zweiter Aspekt der Erfindung betrifft ein Verfahren zur Überprüfung des Vorliegens eines Wertdokuments gemäß Anspruch 6.

Ein dritter Aspekt der Erfindung betrifft ein Wertdokumentsystem mit den Merkmalen des Anspruchs 12.

Als Wertdokumentsystem kann z.B. eines gewählt werden, das mehrere Arten von Banknoten unterschiedlicher Denomination aufweist.

Gemäß einer bevorzugten Variante kann das Wertdokumentsystem so ausgestaltet sein, dass die zweiten Wertdokumente keine statistische Korrelation aufweisen.

Gemäß einer weiteren, bevorzugten Variante umfasst das Wertdokumentsystem erste Wertdokumente, zweite Wertdokumente, dritte Wertdokumente und vierte Wertdokumente, von denen die dritten Wertdokumente und die vierten Wertdokumente lediglich optional sind, nämlich:

a) erste Wertdokumente, die jeweils ein lumineszierendes Gemisch bestehend aus lumineszierenden, partikulären Agglomeraten (A+B) und lumineszierenden Partikeln C aufweisen, wobei

die partikulären Agglomerate (A+B) jeweils zwei unterschiedliche, mit einer ersten bzw. einer zweiten Emissionswellenlänge emittierende, lumineszierende, feste homogene Phasen A und B beinhalten und die lumineszierenden Partikel C jeweils aus einer bei einer dritten Emissionswellenlänge emittierenden, festen homogenen Phase C bestehen, und

bei einer Auswertung von Messwerten, die durch eine an verschiedenen Orten durchgeführte, ortspezifische Messung der ersten Lumineszenzintensität bei der ersten Emissionswellenlänge, der zweiten Lumineszenzintensität bei der zweiten Emissionswellenlänge und der dritten Lumineszenzintensität bei der dritten Emissionswellenlänge erhältlich sind, lediglich zwischen den ersten Lumineszenzintensitäten und den zweiten Lumineszenzintensitäten eine statistische Korrelation vorliegt;

b) zweite Wertdokumente, die jeweils ein lumineszierendes Gemisch bestehend aus lumineszierenden, partikulären Agglomeraten (B+C) und lumineszierenden Partikeln A aufweisen, wobei

die partikulären Agglomerate (B+C) jeweils die zwei unterschiedlichen, mit der zweiten bzw. der dritten Emissionswellenlänge emittierenden, lumineszierenden, festen homogenen Phasen B und C beinhalten und die lumineszierenden Partikel A jeweils aus der bei der ersten Emissionswellenlänge emittierenden, festen homogenen Phase A bestehen, und

bei einer Auswertung von Messwerten, die durch eine an verschiedenen Orten durchgeführte, ortspezifische Messung der ersten Lumineszenzintensität bei der ersten Emissionswellenlänge, der zweiten Lumineszenzintensität bei der zweiten Emissionswellenlänge und der dritten Lumineszenzintensität bei der dritten Emissionswellenlänge erhältlich sind, lediglich zwischen den zweiten Lumineszenzintensitäten und den dritten Lumineszenzintensitäten eine statistische Korrelation vorliegt;

optional c) dritte Wertdokumente, die jeweils ein lumineszierendes Gemisch bestehend aus lumineszierenden, partikulären Agglomeraten (A+C) und lumineszierenden Partikeln B aufweisen, wobei

die partikulären Agglomerate (A+C) jeweils die zwei unterschiedlichen, mit der ersten bzw. der dritten Emissionswellenlänge emittierenden, lumineszierenden, festen homogenen Phasen A und C beinhalten und die lumineszierenden Partikel B jeweils aus der bei der zweiten Emissionswellenlänge emittierenden, festen homogenen Phase B bestehen, und

bei einer Auswertung von Messwerten, die durch eine an verschiedenen Orten durchgeführte, ortspezifische Messung der ersten Lumineszenzintensität bei der ersten Emissionswellenlänge, der zweiten Lumineszenzintensität bei der zweiten Emissionswellenlänge und der dritten Lumineszenzintensität bei der dritten Emissionswellenlänge erhältlich sind, lediglich zwischen den ersten Lumineszenzintensitäten und den dritten Lumineszenzintensitäten eine statistische Korrelation vorliegt; und

optional d) vierte Wertdokumente, die jeweils lumineszierende, partikuläre Agglomerate (A+B+C) aufweisen, wobei die partikulären Agglomerate (A+B+C) jeweils die drei unterschiedlichen, mit der ersten bzw. der zweiten bzw. der dritten Emissionswellenlänge emittierenden, lumineszierenden, festen homogenen Phasen A, B und C beinhalten und

bei einer Auswertung von Messwerten, die durch eine an verschiedenen Orten durchgeführte, ortspezifische Messung der ersten Lumineszenzintensität bei der ersten Emissionswellenlänge, der zweiten Lumineszenzintensität bei der zweiten Emissionswellenlänge und der dritten Lumineszenzintensität bei der dritten Emissionswellenlänge erhältlich sind, eine statistische Korrelation zwischen den ersten Lumineszenzintensitäten, den zweiten Lumineszenzintensitäten und den dritten Lumineszenzintensitäten vorliegt.

Ausführliche Beschreibung der Erfindung

Wertdokumente im Rahmen der Erfindung sind Gegenstände wie Banknoten, Schecks, Aktien, Wertmarken, Ausweise, Pässe, Kreditkarten, Urkunden und andere Dokumente, Etiketten, Siegel, und zu sichernde Gegenstände wie beispielsweise CDs, Verpackungen und ähnliches. Das bevorzugte Anwendungsgebiet sind Banknoten, die insbesondere auf einem Papiersubstrat beruhen.

Lumineszierende Stoffe werden standardmäßig zur Absicherung von Banknoten eingesetzt. Im Falle eines lumineszierenden Echtheitsmerkmals, das z.B. an verschiedenen Stellen im Papier einer Banknote eingebracht ist, unterliegen die Lumineszenzsignale des Merkmals an den verschiedenen Stellen natürlicherweise gewissen Schwankungen. Der vorliegenden Erfindung liegt die Erkenntnis zugrunde, dass eine gezielte Erzeugung von gemischten, partikulären Agglomeraten aus zwei verschiedenen Lumineszenzstoffen die Wirkung einer statistischen Korrelation der Intensitätsschwankungen der Lumineszenzsignale beider Stoffe zur Folge hat. Auf diese Weise ist es möglich, die erfindungsgemäßen Proben durch Auswerten der agglomeratbedingten Signalkorrelation von nicht-korrelierenden Echtheitsmerkmalen zu unterscheiden. Das Auswerten der agglomeratbedingten Signalkorrelation kann z.B. mittels einer Recheneinheit in einem Sensor vorgenommen werden. Nicht-korrelierende Echtheitsmerkmale sind insbesondere die Gemische einzelner, unbehandelter pulverförmiger Lumineszenzstoffe.

Die Nutzung des obigen Effekts führt zu einer Erhöhung der Fälschungssicherheit, weil nicht-korrelierende Merkmalssignale trotz gleicher Bandenlage und Intensität als "unecht" erkannt werden können. Darüber hinaus lässt sich die Anzahl der möglichen Codierungen erhöhen. So können aus einer Codierung, die die einzelnen lumineszierenden Merkmalsstoffe A, B und C enthält, mittels einer gezielten partikulären Agglomeration von jeweils zwei bzw. drei der lumineszierenden Merkmalsstoffe zusätzlich die vier unterscheidbaren Varianten (A+B),C / A,(B+C) / (A+C),B / (A+B+C) generiert werden, wobei die Signale der Stoffe innerhalb einer Klammer jeweils miteinander korrelieren.

Die erfindungsgemäßen partikulären Agglomerate weisen mindestens zwei unterschiedliche lumineszierende Stoffe auf, die unabhängig voneinander durch Strahlung im infraroten und/oder sichtbaren und/oder ultravioletten Bereich zur Lumineszenzemission, bevorzugt Phosphoreszenzemission, anregbar sind. Die Haftung der beiden, in Form von festen homogenen Phasen vorliegenden lumineszierenden Stoffe muss ausreichend stark sein, dass sich bei Lagerung und Verarbeitung keine Trennung der beiden lumineszierenden Stoffe ereignet, zumindest nicht in einem für die Herstellung von Sicherheitsmerkmalen störenden Ausmaß.

Bei den erfindungsgemäßen partikulären Agglomeraten kann es sich insbesondere um Kern/Hülle-Teilchen, Pigmentagglomerate, verkapselte Pigmentagglomerate oder von Nanopigmenten umhüllte Pigmente handeln. Pigmentagglomerate und verkapselte Pigmentagglomerate werden besonders bevorzugt.

Die einzelnen, lumineszierenden, festen homogenen Phasen, die die erfindungsgemäßen partikulären Agglomerate bilden, können z.B. auf einem eine Matrix bildenden anorganischen Festkörper basieren, der mit einem oder mehreren Seltenerdmetallen oder Übergangsmetallen dotiert ist.

Geeignete anorganische Festkörper, die zur Bildung einer Matrix geeignet sind, sind beispielsweise:

Oxide, insbesondere 3- und 4-wertige Oxide wie z. B. Titanoxid, Aluminiumoxid, Eisenoxid, Boroxid, Yttriumoxid, Ceroxid, Zirconoxid, Bismutoxid, sowie komplexere Oxide wie z. B. Granate, darunter u. A. z.B. Yttrium-Eisen-Granate, Yttrium-Aluminium-Granate, Gadolinium-Gallium-Granate;

Perowskite, darunter u.A. Yttrium-Aluminium-Perowskit, Lanthan-Gallium-Perowskit; Spinelle, darunter u. A. Zink-Aluminium-Spinelle, Magnesium-Aluminium-Spinelle, Mangan-Eisen-Spinelle; oder Mischoxide wie z.B. ITO (Indiumzinnoxid);

Oxyhalogenide und Oxychalkogenide, insbesondere Oxychloride wie z. B. Yttriumoxychlorid, Lanthanoxychlorid; sowie Oxysulfide, wie z.B. Yttriumoxysulfid, Gadoliniumoxysulfid;

Sulfide und andere Chalkogenide, z.B. Zinksulfid, Cadmiumsulfid, Zinkselenid, Cadmiumselenid;

Sulfate, insbesondere Bariumsulfat und Strontiumsulfat;

Phosphate, insbesondere Bariumphosphat, Strontiumphosphat, Calciumphosphat, Yttriumphosphat, Lanthanphosphat, sowie komplexere phosphatbasierte Verbindungen wie z.B. Apatite, darunter u. A. Calciumhydroxylapatite, Calciumfluoroapatite, Calciumchloroapatite; oder Spodiosite, darunter z.B. Calcium-Fluoro-Spodiosite, Calcium-Chloro-Spodiosite;

Silicate und Aluminosilicate, insbesondere Zeolithe wie z.B. Zeolith A, Zeolith Y; zeolithverwandte Verbindungen wie z.B. Sodalithe; Feldspate wie z.B. Alkalifeldspate, Plagioklase;

weitere anorganische Verbindungsklassen wie z.B. Vanadate, Germanate, Arsenate, Niobate, Tantalate.

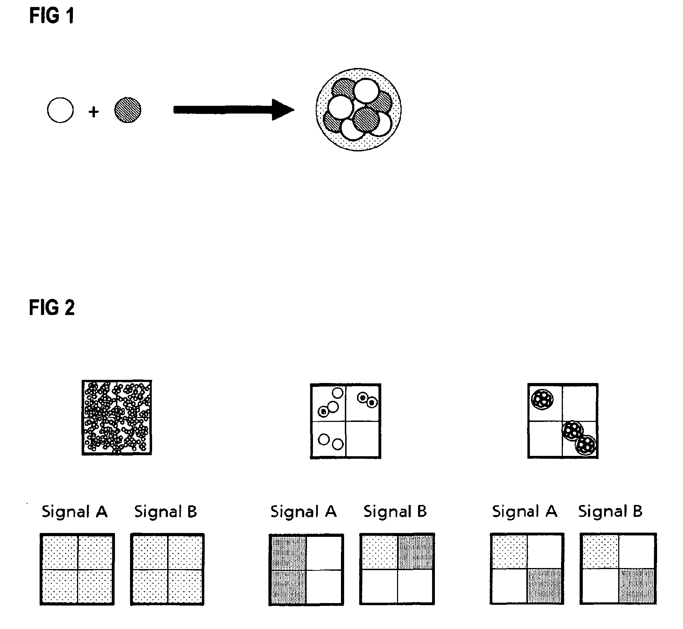

Das der Erfindung zugrunde liegende Prinzip wird nachstehend im Detail in Verbindung mit den Figuren 1 bis 4 beschrieben:

Bei der Absicherung von Banknoten mit Sicherheitsmerkmalen auf Basis von Lumineszenzpigmenten (wie die oben erwähnten, mit Seltenerdmetallen oder Übergangsmetallen dotierten anorganische Matrizen) genügt häufig die Einbringung einer relativ geringen Menge des Merkmals. Die Massenanteile können insbesondere im Promille-Bereich liegen. Bei der Einbringung eines solchen Merkmals in das Papier einer Banknote in stark verdünnter Form ist die räumliche Verteilung der Pigmentpartikel unter normalen Umständen jedoch nicht perfekt homogen. Bei rein zufälliger Verteilung der Pigmentpartikel in der Blattmasse existieren naturbedingt Bereiche mit höheren und niedrigeren Partikelkonzentrationen. Dies kann sich bei der Messung der Lumineszenzintensität an verschiedenen Stellen des Banknotensubstrats durch Intensitätsschwankungen bemerkbar machen.

Es ist im Stand der Technik bekannt, zur Erhöhung der Sicherheit Codierungen aus zwei oder mehr Lumineszenzstoffen als Sicherheitsmerkmal einzusetzen. Intensitätsschwankungen, die auf der zufälligen Verteilung der Pigmentpartikel innerhalb der Blattmasse beruhen, sind dabei unabhängig voneinander. Es besteht somit kein Zusammenhang zwischen den zufälligen, ortsabhängigen Intensitätsschwankungen zweier verschiedener Merkmalsstoffe. Dabei ist zu beachten, dass dies nicht für Inhomogenitäten des Papiers selbst gilt, z.B. bei lokal unterschiedlichen Papierdicken. In diesem Fall würden sich Schwankungen der Lumineszenzintensität, z.B. niedrige Werte an dünneren Papierstellen, auf beide Merkmalsstoffe in gleichem Ausmaß auswirken. Durch eine geeignete Wahl der Sicherheitsmerkmale und eine möglichst niedrige Konzentration im Substrat können substratbedingte Schwankungen gegenüber den durch die zufällige Partikelverteilung bedingten Schwankungen oft vernachlässigt werden (oder durch geeignete Auswerteverfahren eliminiert werden).

Ein anderes Bild ergibt sich hingegen bei der Kombination zweier verschiedener Lumineszenzstoffe zu einem partikulären Agglomerat (siehe Figur 1). Beispielsweise würde ein partikuläres Agglomerat, das durch Agglomerieren einer Mischung der Lumineszenzpigmente "A" und "B" erhalten wurde, beide Pigmenttypen in sich vereinen.

Bei der Einbringung einer Mehrzahl von in der Figur 1 gezeigten partikulären Agglomeraten in Papier und einer zufälligen Verteilung in der Papiermasse würde unabhängig vom Substrat ein Zusammenhang zwischen den räumlichen Verteilungen der Lumineszenzpigmente "A" und "B" entstehen (siehe Figur 2).

In der Figur 2 werden die Lumineszenzintensitäten der Leuchtpigmente "A" und "B" an vier Stellen eines Papiersubstrats schematisch verglichen, wobei die dicht gepunkteten Flächen hohe Signalintensitäten und die weniger dicht gepunkteten Flächen weniger hohe Signalintensitäten symbolisieren.

Figur 2 Links:

Pigmente "A" und "B", die jeweils eine niedrige Lumineszenzintensität aufweisen, werden in hoher Menge eingesetzt. Dies führt zu geringen Schwankungen der Lumineszenzintensität in den einzelnen Bereichen. "Signal A" und "Signal B" sind immer ähnlich stark.

Figur 2 Mitte:

Pigmente "A" und "B", die jeweils eine hohe Lumineszenzintensität aufweisen (dies kann z.B. erzielt werden, indem die Partikelgröße auf größere Partikel eingestellt wird, oder indem Reinstoff-Agglomerate verwendet werden), werden in niedriger Menge eingesetzt. Dies führt dazu, dass einige Bereiche ein hohes "Signal A" ergeben und einige Bereiche ein hohes "Signal B" aufweisen. Zwischen den beiden Signalen besteht kein Zusammenhang, d.h. keine statistische Korrelation. Unter dem Begriff "Reinstoff-Agglomerat" wird ein Agglomerat verstanden, das lediglich Partikel einer einzigen Partikelsorte aufweist.

Figur 2 Rechts:

Partikuläre Agglomerate, die aus Partikeln "A" und Partikeln "B" erhältlich sind, werden eingesetzt. Die Ausgangsstoffe A und B können jeweils eine hohe oder eine niedrige Intensität aufweisen. Es resultieren Bereiche mit erhöhtem "Signal A" und zugleich erhöhtem "Signal B" und Bereiche mit niedrigem "Signal A" und zugleich niedrigem "Signal B". Mit anderen Worten, zwischen den beiden Signalen besteht eine statistische Korrelation.

Der in Figur 2 Rechts gezeigte Zusammenhang zwischen "Signal A" und "Signal B" ist nicht notwendigerweise direkt proportional. Die partikulären Agglomerate bestehen idealerweise, aber nicht notwendigerweise, aus 50% Partikeln A und 50% Partikeln B. Es ist möglich, dass eine Herstellungsmethode zu partikulären Agglomeraten mit einer statistischen inneren Verteilung der Pigmente A und B führt. Beispielsweise können Agglomerat-Zusammensetzungen entstehen, die im Mittel aus zehn Pigmentpartikeln bestehen und Agglomerate mit einer Zusammensetzung "5A+5B", aber auch "3A+7B" und "7A+3B" etc. beinhalten. So ist es z.B. möglich, dass an einer Messposition des Papiersubstrats, an der eine hohe lokale Konzentration von Agglomeraten vorliegt, ein besonders starkes Signal des Lumineszenzstoffs "A" gemessen wird, das Signal des Lumineszenzstoffs "B" jedoch nicht signifikant erhöht ist. Dies ist jedoch statistisch gesehen unwahrscheinlich. Bei einer lokalen Häufung bzw. Verarmung der Agglomerate ist es wahrscheinlich, zu einem gewissen Grad eine Häufung bzw. Verarmung der Signale von "A" und "B" anzutreffen. Die Signale korrelieren somit miteinander. Zur weiteren Erklärung dieser Korrelation folgt das Anwendungsbeispiel 1:

Anwendungsbeispiel 1:

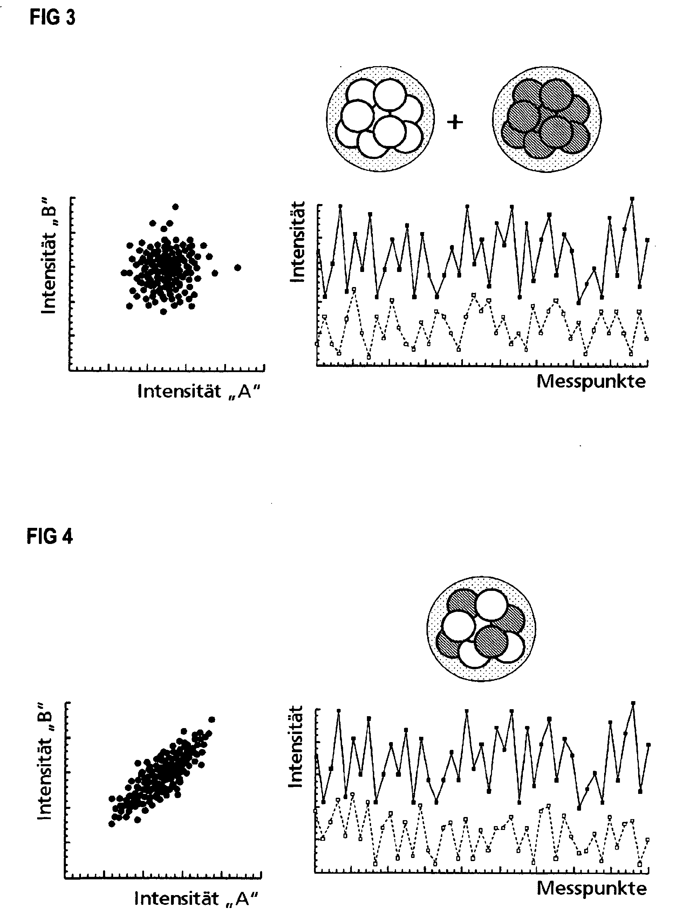

Es wurden Mischagglomerate aus zwei Lumineszenzstoffen "A" und "B" hergestellt. Zum Vergleich wurden die Agglomerate "nur A" und die Agglomerate "nur B" hergestellt. Anschließend wurde in einem Blattbildner ein Papierblatt mit 2 Gew.-‰ der Mischagglomerate aus "A" und "B" präpariert. Des Weiteren wurde ein Papierblatt mit einer Mischung von 1 Gew.-‰ "nur A" und 1 Gew.-‰ "nur B" präpariert. Die spektrale Untersuchung ergibt, dass in beiden Blättern jeweils die Signale von Stoff "A" und Stoff "B" bei der gleichen Wellenlänge und mit vergleichbarer Intensität erkennbar sind. Ein üblicher Sensor, der z.B. die Bandenlage und die Lumineszenzintensität überprüft, würde somit keinen Unterschied zwischen den beiden Blättern feststellen und beide als "identisch" bzw. "echt" anerkennen. Beachtet man jedoch zusätzlich die Korrelation der beiden Signale von "A" und "B" untereinander, lassen sich deutliche Unterschiede zwischen den Blättern erkennen. Hierzu wurden die Blätter an einem Sensor vermessen, der automatisch an mehreren Messpositionen gleichzeitig die Signalstärke der beiden Merkmale A und B prüft. Zur Erhöhung der Anzahl an Datenpunkten wurden mehrere Stellen des Blattes vermessen und ausgewertet. Im Falle des Blattes mit den beiden "reinen" Stoffen fluktuieren die Signale von "A" und "B" unabhängig voneinander (siehe Figur 3). Trägt man die Intensitäten von "A" und "B" graphisch gegeneinander auf, entsteht daher ein runder Punkthaufen. Im Falle des Blattes mit den Mischagglomeraten ist eine Abhängigkeit der Signalfluktuationen erkennbar (siehe Figur 4). Trägt man die Intensitäten von "A" und "B" graphisch gegeneinander auf, erkennt man eine entlang den Achsendiagonalen gestreckte Punktverteilung. Die Punktverteilung zeigt eine Korrelation zwischen der Signalstärke der beiden Komponenten an.

Wären die normierten Signalintensitäten von "A" und "B" an allen Messpositionen des Papiersubstrats identisch, würde die in Figur 4 dargestellte Punkteverteilung idealerweise eine Linie abbilden. Dieses Verhalten ist in der Realität aufgrund der statistischen Zusammensetzung der Agglomerate häufig nicht anzutreffen, weil für ein solches Verhalten alle Agglomerate ein festes Verhältnis von z.B. exakt 50% "A"-Anteil und exakt 50% "B"-Anteil besitzen müssten. In der Praxis ist die Erzeugung derartiger Systeme oder eine Annäherung an diesen Zustand jedoch möglich, z.B. durch (1) eine elektrostatische Bevorzugung der heterogenen Agglomeration, oder (2) eine massive Erhöhung der Partikelanzahl pro Agglomerat, oder (3) durch Verwendung von Nanopartikeln, oder (4) durch kontrollierten Aufbau von Kern-Schale-Systemen mit definierten Größen.

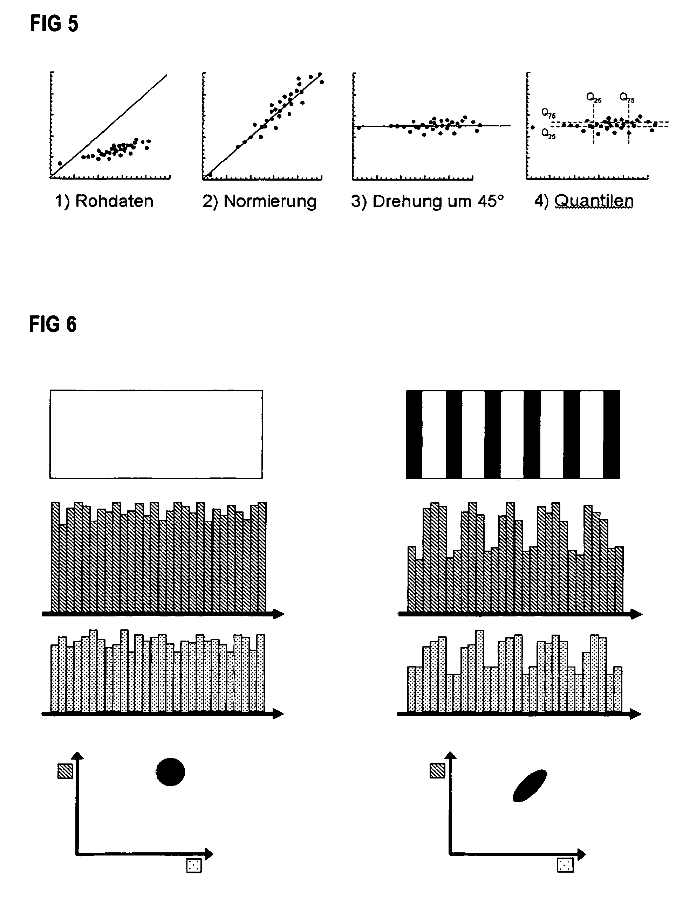

Die Auswertung von Messdaten und Bestimmung einer statistischen Korrelation wird nachstehend in Verbindung mit der Figur 5 im Detail beschrieben.

Für die Auswertung von Messdaten und die Bestimmung der Anwesenheit oder des Fehlens einer statistischen Korrelation können verschiedene mathematische Verfahren herangezogen werden.

Anstelle von "statistischer Korrelation" kann man auch von einer "statistischen Abhängigkeit" sprechen. Dabei wird geprüft, ob pixelweise eine statistische Abhängigkeit zwischen der Intensität "A" und der Intensität "B" vorliegt (ja/nein-Entscheidung).

Es können insbesondere quantitative Maße definiert werden, die angeben, wie stark die pixelweise statistische Abhängigkeit zwischen Intensität "A" und Intensität "B" ist. Auf diese Weise lassen sich Sortierklassen definieren.

Es existieren zahlreiche Lehrbuchverfahren, nach denen die Stärke der Abhängigkeit von Zufallsvariablen bewertet wird. Im Fachbuch W. H. Press: "Numerical Recipes in C - The Art of Scientific Computing", Cambridge University Press, 1997, Seite 628 - 645, dessen Offenbarungsgehalt hierin durch Bezugnahme enthalten ist, sind z.B. die folgenden Verfahren beschrieben:

Drei Datentypen: "nominal" (allgemeine Klassen, z.B. rot, gelb); "ordinal" (geordnete Klassen, z.B. gut, mittel, schlecht); "continuous" (kontinierliche Messwerte, z.B. 1.2,3.5,2.7). "Nominal" ist am allgemeinsten, "continuous" am speziellsten.

1. Continuous

Korrelation, speziell lineare Korrelation (Korrelationskoeffizient nach Bravais-Pearson). Diese Art der Berechnung ist insbesondere bei zweidimensionalen Normalverteilungen geeignet. Es wird bevorzugt, zuvor über Quantile Signal-Ausreißer aus der Statistik zu entfernen.

2. Ordinal

Rangordnungsverfahren: Führe die Berechnungen nicht auf den Originalwerten, sondern auf den Rangordnungs-Indizes durch.

a) Spearman Rangkorrelationskoeffizient: obiger Korrelationskoeffizient nach Bravais-Pearson angewendet auf die Rangordnungs-Indizes.

b) Kendall's Tau: Untersucht, wie oft bei allen Paaren von Datenpunkten die Rangordnung erhalten bleibt.

Diese Verfahren sind für beliebige Verteilungen geeignet. Insbesondere wirken sich Signal-Ausreißer hierbei nicht störend aus.

3. Nominal

Auswertungen basierend auf Kontingenztabellen (d.h. Tabellen mit den absoluten oder relativen Häufigkeiten von Ereignissen mit diskreten (d.h. nicht kontinuierlichen) Werten).

a) Chi-Quadrat Auswertung zur Prüfung, ob eine statistische Abhängigkeit vorliegt.

b) Entropie-basierte Auswertung. Beispiel: Symmetrischer Unsicherkeitskoeffizient.

Es wird bei der Anwendung dieser Verfahren bevorzugt, zuvor die 2-dimensionalen reellen Messwerte über Klassenintervalle in 2-dimensionale Klassen einzuteilen und die 2-dimensionalen Häufigkeiten (Kontingenztabelle) zu ermitteln.

Weiterführende Literatur zum obigen Thema: R. Storm: "Wahrscheinlichkeitsrechnung, mathematische Statistik und statistische Qualitätskontrolle", Carl Hanser Verlag, 12. Auflage, 2007, Seiten 246-285, deren Offenbarungsgehalt hierin durch Bezugnahme enthalten ist.

Weiterführende Informationen zum obigen Thema sind im Internet auf den folgenden Seiten erhältlich:

http://en.wikipedia.org/wiki/Correlation_and_dependence
http://en.wikipedia.org/wiki/Spearman%27s_rank_correlation_coefficient
http://de.wikibooks.org/wiki Mathematik:_Statistik_Korrelationsanalyse
http://de.wikipedia.org/wiki/Rangkorrelationskoeffizient

Im Folgenden werden des besseren Verständnisses halber beispielhaft zwei statistische Methoden zur Auswertung beschrieben.

Beispiel 1: die folgende Korrelationsfunktion:

$$Kor(X,Y) = \frac{Cov(X,Y)}{\sigma_X \cdot \sigma_Y} = \frac{\frac{1}{n}\sum_{i=1}^{n}(x_i - \mu_X)\cdot(y_i - \mu_Y)}{\sigma_X \cdot \sigma_Y}$$

Sie liefert einen positiven Beitrag, wenn zwei Datenpunkte einer Reihe sich gleichzeitig über oder unter ihrem jeweiligen Mittelwert befinden, sich also jeweils zwei "hohe" oder zwei "tiefe" Signalintensitäten von "A" und "B" am gleichen Ort befinden.

Beispiel 2: Verfahren mit mehreren Schritten, mit dem Ziel, das Längen-zu-Breiten-Verhältnis der aus den Messdaten erhaltenen Punktwolken auszuwerten (siehe Figur 5). Um den Einfluss von "Ausreißern" zu minimieren, wurden dabei jeweils die 25% der höchsten bzw. tiefsten Signalwerte ignoriert. Korrelierende Punktwolken sind länglich und besitzen ein stark ausgeprägtes Länge-zu-Breite-Verhältnis, bei nicht korrelierenden Punktwolken sind Länge und Breite etwa gleich groß.

Das erfindungsgemäße Wertdokument kann im Bereich der lumineszierenden Codierung zusätzlich einen Druck, ein Wasserzeichen und/ oder ein Sicherheitselement auf Basis eines Sicherheits-Patch oder eines Sicherheitsstreifens aufweisen. Solche zusätzlichen Sicherheitselemente sind Faktoren, die die korrekte Auswertung der statistischen Korrelation stören bzw. einen zusätzlichen Korrelationseffekt verursachen, der nicht durch den besonderen Aufbau des erfindungsgemäßen partikulären Agglomerats verursacht wird. Hierzu zählen alle Faktoren, durch die die Signalstärke beider auszuwertender Lumineszenzen an derselben Stelle im Papiersubstrat verändert wird. Dies kann z.B. eine Abschwächung oder Verstärkung sein, die auf eine der folgenden Ursachen zurückzuführen ist:

- eine lokale Dicken- oder Dichtenänderung im Papiersubstrat, z.B. im Falle eines Wasserzeichens;
- eine Absorption der Anregungsstrahlung für das Lumineszenzmerkmal durch einen Druck (bzw. eine Überdruckung) oder einen Sicherheitsstreifen;
- eine zusätzliche Emissionsstrahlung, die von einem Druck (bzw. einer Überdruckung) oder einem Sicherheitsstreifen herrührt.

Figur 6 zeigt einen Vergleich zwischen den Lumineszenzsignalen zweier nicht korrelierender Luminophore in einem unbedruckten Papiersubstrat und nach Überdruckung mit einem Streifenmuster. Im unbedruckten Papiersubstrat besteht erwartungsgemäß kein merklicher Zusammenhang zwischen den Signalstärken der beiden Luminophore. Nach der Überdruckung erfolgt an den überdruckten Stellen jedoch eine Abschwächung des Signals, wodurch eine räumliche Korrelation der Signalintensitäten beider Luminophore verursacht wird. Es entsteht somit ein ähnlicher Effekt, wie er durch den Einsatz der erfindungsgemäßen partikulären Agglomerate erreicht wird. Folglich wird eine klare Unterscheidung zwischen "normalen", d.h. nicht erfindungsgemäßen, Merkmalen und erfindungsgemäßen Merkmalen erschwert. Im Folgenden werden daher beispielhaft zwei Wege aufgeführt, durch die sich solche unerwünschten, durch Überdruckung oder Ähnliches verursachten Korrelationseffekte eliminieren bzw. reduzieren lassen:

Korrekturmethode 1:

Es wird in einheitlicher Konzentration eine zusätzliche ("dritte"), bei einer dritten Emissionswellenlänge lumineszierende Komponente in das Wertdokument eingeführt, die nicht-korrelierend ist. Durch Einführen einer geeigneten, dritten nicht-korrelierenden Lumineszenzkomponente und Normierung durch ihre Signalintensität verschwinden z.B. sämtliche der oben beschriebenen störenden Effekte. Besonders geeignet sind hierbei Lumineszenzstoffe, die in einem unmodifizierten Papiersubstrat besonders kleine oder idealerweise gar keine ortsabhängigen Schwankungen der Lumineszenzintensität aufweisen, also ohne zusätzliche Einflüsse eine räumlich homogene Leuchtintensität besitzen würden. Auf das in der Figur 6 aufgeführte Beispiel angewandt würde dies bedeuten, dass die periodische Abschwächung durch das überdruckte Streifenmuster neben den ersten beiden Luminophoren auch die dritte Komponente entsprechend beeinflusst. Da über die dritte homogene Komponente das Ausmaß der "Abschwächung" durch externe Effekte bekannt ist, lassen sich die Ausgangszustände aller anderen Komponenten zurückrechnen. Dieses Verfahren eliminiert somit sämtliche Korrelationseffekte, die gleichermaßen auf alle drei Komponenten wirken, wozu Überdruckung und Dickenunterschiede im Substrat zählen, hat jedoch keinen Einfluss auf Korrelationseffekte, die nur bestimmte Komponenten betreffen. Auf diese Weise werden die erfindungsgemäßen, agglomerationsbasierten Korrelationseffekte nicht beeinflusst.

Korrekturmethode 2:

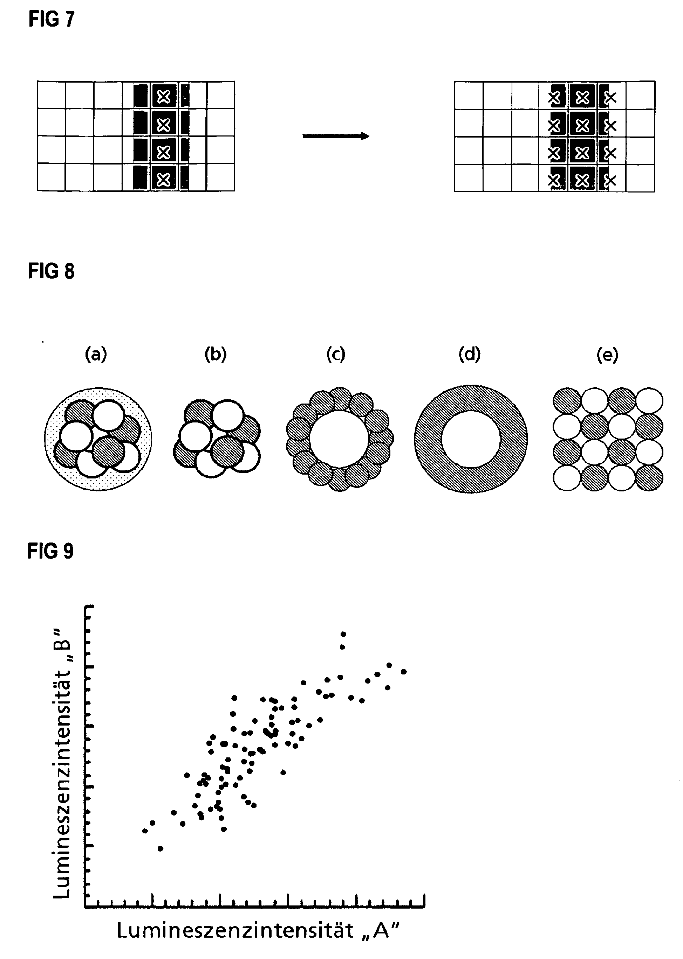

Ist das Einführen der oben erwähnten, dritten Komponente z.B. aus Kostengründen unerwünscht, können je nach Anwendungsfall auch andere Methoden eingesetzt werden. Befindet sich die Lumineszenzintensität in einem unmodifizierten Papiersubstrat z.B. gewöhnlich oberhalb eines gewissen Schwellenwerts und wird erst durch Überdruckungseffekte oder Dickenänderungen im Papiersubstrat etc. unterhalb dieses Schwellenwerts gebracht, können entsprechende Datenpunkte aus der Analyse eliminiert werden. Dieses Verfahren eignet sich besonders für Fälle mit abrupten und starken Intensitätsänderungen, z.B. im Falle einer Überdruckung mit scharf definierten Linien und Bereichen, jedoch weniger für allmähliche Farbabstufungen mit gleitendem Wechsel oder filigrane Muster. Liegen die gemessenen Bereiche örtlich nah beieinander, ist es vorteilhaft, beim Unterschreiten des Schwellenwerts an einem Messpunkt sämtliche benachbarten Messpunkte ebenfalls zu eliminieren (siehe Figur 7). Dadurch werden teilweise überdruckte Messbereiche an der Grenze eines überdruckten Bereichs ausgeschlossen, auch wenn deren Intensitäten aufgrund der nur unvollständigen Überdruckung oberhalb des Schwellwerts liegen.

In der Figur 7 ist gezeigt, wie überdruckte Messbereiche unterhalb eines Intensitätsschwellenwerts ausgeschlossen werden (in der Figur mit Kreuzen bezeichnet). Anschließend werden die benachbarten Bereiche ebenfalls ausgeschlossen.

Die erfindungsgemäßen partikulären Agglomerate werden nachstehend in Verbindung mit der Figur 8 anhand von bevorzugten Ausführungsformen beschrieben.

Prinzipiell sind für das Erzeugen der erfindungsgemäßen, partikulären Agglomerate ausgehend von zwei (oder drei) Lumineszenzstoffen eine Reihe von Herstellungsverfahren geeignet. Im Normalfall werden die zuvor vereinzelt vorliegenden Lumineszenzpartikel dazu veranlasst, sich zu einer größeren Einheit zusammenzulagern. Die so erhaltene größere Einheit wird anschließend so fixiert, dass sich die Partikel während der Anwendung als Sicherheitsmerkmal nicht mehr voneinander trennen können. Dabei ist ausschlaggebend, dass die größeren Einheiten möglichst gleiche Teile an beiden (bzw. von den drei) Lumineszenzstoffen beinhalten, wobei mit den meisten Herstellungsmethoden ein zufälliges statistisches Gemisch der Partikel erhalten wird.

Unerwünscht ist eine Zusammenlagerung jeweils gleicher Partikel, so dass die Agglomerate nur eine einzige Luminophor-Art beinhalten. Dies kann z.B. dann erfolgen, wenn die unterschiedlichen Luminophore vor dem Zusammenlagerungsprozess nicht ausreichend durchmischt sind, oder die Zusammenlagerung gleichartiger Stoffe durch Oberflächeneffekte oder Ähnliches begünstigt wird. Im Normalfall, bzw. bei korrekter Durchführung der Syntheseprozeduren, sind solche Effekte jedoch zu vernachlässigen.

Ein wichtiger Faktor sind die Größen der Partikel, die das Agglomerat aufbauen, sowie die Größe des entstehenden Agglomerates selbst. Für Anwendungen als Sicherheitsmerkmal im Banknotenbereich sollten die Agglomerate eine Korngröße von $20\,\mu m$ nicht überschreiten. Die Partikel, aus denen das Agglomerat zusammengesetzt wird, sollten deutlich kleiner sein, da mit abnehmender Größe eine höhere Anzahl Partikel pro Agglomerat eingebaut werden kann. Durch eine höhere Anzahl eingebauter Partikel erhöht sich wiederum die Wahrscheinlichkeit, eine "geeignete Verteilung" beider Partikelarten im Agglomerat anzutreffen.

Damit ist folgender Zusammenhang gemeint: Wäre der Ausgangsstoff so groß, dass nur jeweils drei Partikel der Stoffe A und B ein Agglomerat bilden könnten, ohne die maximale Agglomeratsgröße zu überschreiten, wären die Kombinationen ‚AAA' / ‚AAB'/ ‚ABB' / ‚BBB' denkbar. Eine derartige Zusammensetzung wäre jedoch für den erfindungsgemäßen Einsatz vollkommen ungeeignet. Denn 25% der Agglomerate würden nur aus einem einzigen Stoff (AAA bzw. BBB) bestehen und somit keine Korrelation erzeugen, die anderen 75% würden zu je einem Drittel aus einem Stoff und zu zwei Dritteln aus dem zweiten Stoff bestehen, und würden somit nur schlechte Korrelationswerte erzeugen.

Stellt man sich als gegenüberliegenden Extremfall ein Agglomerat vor, welches aus 10000 (oder "unendlich vielen") Einzelpartikeln aufgebaut ist, so ist die Wahrscheinlichkeit, dass alle Partikel zufällig identisch sind, beliebig klein. Bei einem Einsatz gleicher Mengen der beiden Partikelarten für die Synthese wird auch das Mischverhältnis in den daraus hergestellten Agglomeraten 50% betragen bzw. kaum davon abweichen. Solche Agglomerate würden sich somit gut zum Einsatz als erfindungsgemäßes Merkmal eignen.

In der Praxis befindet man sich häufig zwischen diesen beiden Extremen. Die Verringerung der Luminophorgröße führt meistens zu einem merklichen Verlust der Leuchtintensität. Besonders ab einer Korngröße von ca. $1\,\mu m$

zeigen viele Leuchtstoffe einen deutlichen Intensitätsverlust, welcher meistens auf die Erhöhung der Oberfläche zurückzuführen ist, da hier Energie strahlungslos an Oberflächendefekten abgebaut werden kann. Eine zu große Korngröße führt jedoch zu den oben beschriebenen Problemen bei der Herstellung geeigneter Agglomerate.

Als Lumineszenzstoffe zum Aufbau der Agglomerate werden daher bevorzugt kleine bis mittelgroße Partikel, z.B. mit einer Korngröße zwischen 1 und 5 μm, eingesetzt.

Es sollte jedoch erwähnt werden, dass bei Verfügbarkeit entsprechend intensiver Leuchtstoffe mit kleiner Partikelgröße, z.B. im Nanometerbereich, diese ebenfalls eingesetzt werden könnten.

Das Mengenverhältnis der beiden Stoffe A und B, aus denen die Agglomerate hergestellt werden, beträgt idealerweise 1:1, falls beide Stoffe die gleiche Intensität und Korngröße besitzen. Im Anwendungsfall kann z.B. bei großen Unterschieden in der Leuchtstärke oder bei unterschiedlichen Korngrößenverteilungen eine Anpassung dieses Verhältnisses vorteilhaft sein. Ebenso kann es unter Umständen notwendig sein, das Mengenverhältnis anzupassen, um z.B. ein bestimmtes gewünschtes mittleres Intensitätsverhältnis beider Signale im Endprodukt zu erzeugen.

Alle bisherigen Beschreibungen beziehen sich der Einfachheit halber auf die Erzeugung von Agglomeraten aus zwei Leuchtstoffen, jedoch lassen sich analog auch drei bzw. beliebig viele Leuchtstoffe zu einem Agglomerat vereinen, wobei die Signalintensitäten aller beteiligten Leuchtstoffe damit untereinander korrelieren.

Die als "Agglomerate" bezeichneten Einheiten, welche jeweils mehrere Luminophoreinheiten beinhalten, sind gemäß einer Variante ein ungeordneter Haufen aus zusammenhaftenden Partikeln, welche fixiert oder permanent "zusammengeklebt" wurden (siehe Figur 8 a und b). Dies kann z.B. durch Umhüllung mit einer Polymer- oder Silicaschicht (siehe z.B. die WO 2006/072380 A2), oder durch Verknüpfung der Partikeloberflächen untereinander über chemische Gruppen etc. geschehen. Solche Agglomerate sind technisch verhältnismäßig einfach herzustellen und werden daher bevorzugt. Die Partikel können gemäß einer weiteren Variante einen anderen Aufbau aufweisen, ohne an Funktionalität zu verlieren (siehe Figur 8c, d und e). Unter Umständen können alternative Ausführungsformen, wie geordnete Agglomerate oder Core-Shell-Systeme, vorteilhafte Eigenschaften besitzen (z.B. eine kontrollierte Partikelverteilung). Ihre Synthese ist jedoch meistens aufwändiger.

In der Figur 8 werden mit Bezug auf die partikulären Agglomerate die folgenden Beispiele gezeigt:

(a) ungeordnetes Pigmentagglomerat, das zwei unterschiedliche (insbesondere zusammenhaftende) Lumineszenzpigmente aufweist und mit einer Polymer- oder Silicaschicht umhüllt bzw. verkapselt ist;

(b) ungeordnetes Pigmentagglomerat, das zwei unterschiedliche, zusammenhaftende Lumineszenzpigmente aufweist;

(c) Core-Shell-Teilchen, bei dem der Kern durch ein erstes Lumineszenzpigment gebildet ist und die Hülle durch eine Mehrzahl zweiter Lumineszenzpigmente gebildet ist;

(d) Core-Shell-Teilchen, bei dem der Kern durch ein erstes Lumineszenzpigment gebildet ist und die durchgehende, homogene Hülle aus einem zweiten lumineszierenden Material gebildet ist;

(e) geordnetes Pigmentagglomerat, das zwei unterschiedliche Lumineszenzpigmente aufweist.

Für das obige Beispiel eines ungeordneten Agglomerats wird nachfolgend ein Synthesebeispiel beschrieben:

Hierzu werden die zu agglomerierenden Luminophore (bzw. Lumineszenzpigmente) in Wasser dispergiert. Eine hohe Konzentration an gelöstem Kaliumhydrogencarbonat führt zu einer temporären Agglomeration der Luminophorpartikel (Abschirmung der abstoßenden Oberflächenladung durch Kaliumkationen). Die mittlere Agglomeratgröße kann durch Kontrolle der Rührgeschwindigkeit, Temperatur, Konzentration etc. eingestellt werden. Dabei ist es wichtig, möglichst geringe bzw. keine Scherkräfte aufkommen zu lassen, welche die Agglomerate ansonsten wieder in Einzelpartikel auftrennen würde. Der agglomerierte Zustand wird durch langsame Zudosierung von Kaliumwasserglas fixiert, da dieses mit dem gelösten Hydrogencarbonat zu Silica reagiert und so das Agglomerat beschichtet bzw. die einzelnen Partikel "verklebt". Nach Filtration kann das Produkt bei 250°C getempert werden, um den Zusammenhalt der im Agglomerat enthaltenen Partikel zusätzlich zu verstärken.

Weitere Ausführungsbeispiele sowie Vorteile der Erfindung werden nachfolgend in Verbindung mit den Figuren 9-12 erläutert.

NIR-Lumineszenzpigmente

Die Abkürzung "NIR" bezeichnet den Begriff "nahes Infrarot".

In den Anwendungsbeispielen werden fünf anorganische NIR-Lumineszenzpigmente mit den folgenden Eigenschaften verwendet:

NIR-Lumineszenzpigment "A": Lumineszenzmaximum 1000 nm bei Anregung mit 802 nm;
NIR-Lumineszenzpigment "B": Lumineszenzmaximum 1082 nm bei Anregung mit 802 nm;
NIR-Lumineszenzpigment "C": Lumineszenzmaximum 1545 nm bei Anregung mit 950 nm;

NIR-Lumineszenzpigment "D": Lumineszenzmaximum 2040 nm bei Anregung mit 950 nm;
NIR-Lumineszenzpigment "E": Lumineszenzmaximum 1792 nm bei Anregung mit 950 nm;

Alle Pigmente haben eine Korngröße von D99<5μm und D50<2μm.

Vorschrift 1 zur Erzeugung eines Lumineszenzpartikel-Agglomerats

10g NIR-Lumineszenzpigment werden in 60 g Wasser dispergiert. Es werden 120 ml Ethanol sowie 3,5 ml Ammoniak (25%) zugegeben. Unter Rühren werden 10 ml Tetraethylorthosilicat zugegeben und die Reaktionsmischung weitere acht Stunden gerührt. Das Produkt wird abfiltriert, zweimal mit 40 ml Wasser gewaschen und bei 60°C im Trockenschrank getrocknet. Es werden Partikelagglomerate mit einer Korngröße D99=20-30μm erhalten. Die erhaltenen Agglomerate werden bei 300°C eine Stunde lang getempert und anschließend mit einer Ultrazentrifugalmühle behandelt. Man erhält ein Produkt mit einer reduzierten Korngröße D99 = 15-18 μm.

Vorschrift 2 zur Erzeugung eines Lumineszenzpartikel-Agglomerats

33 g NIR-Lumineszenzpigment werden in 245g Wasser dispergiert. Es werden 44g Kaliumhydrogencarbonat hinzugefügt und unter Rühren über den Verlauf einer Stunde eine Kaliumwasserglas-Lösung hinzugetropft, so dass am Ende ein $SiO_2$-Anteil von ca. 20% im Produkt vorliegt. Das Produkt wird abfiltriert, zweimal mit 150 ml Wasser gewaschen und bei 60°C im Trockenschrank getrocknet. Es werden Partikelagglomerate mit einer Korngröße D99 = 18-20μm erhalten.

Erzeugte Agglomerate

"AB1": 5g NIR-Pigment A und 5g NIR-Pigment B werden nach Vorschrift 1 behandelt.

"A1": 10 g NIR-Pigment A werden nach Vorschrift 1 behandelt.

"B1": 10 g NIR-Pigment B werden nach Vorschrift 1 behandelt.

"CD2": 16,6g NIR-Pigment C und 16,6 NIR-Pigment D werden nach Vorschrift 2 behandelt.

"C2": 33g NIR-Pigment C werden nach Vorschrift 2 behandelt.

"D2": 33g NIR-Pigment D werden nach Vorschrift 2 behandelt.

Anwendungsbeispiel 1: Signalkorrelation im Papiersubstrat ohne Korrekturkomponente

Die zwei Lumineszenzpigmente aufweisenden Agglomerate (AB1) werden der Papiermasse während der Blattherstellung so hinzugefügt, dass die Agglomerate AB1 im entstehenden Blatt mit einem Massenanteil von 0,1 Gewichtsprozent homogen im Papierkörper verteilt sind. Das Blatt wird anschließend an mehreren unterschiedlichen Stellen durch Anregung mit Licht der Wellenlänge 802 nm (Größe des Messflecks etwa 1 mm$^2$) vermessen. Es werden jeweils die Intensitäten der Lumineszenz bei 1000 nm (A) und 1082 nm (B) detektiert. Eine Auftragung der erhaltenen Messpunkte ergibt den Graphen in Figur 9.
Figur 9 zeigt die relativen Lumineszenzintensitäten bei 1000 nm (A) (Hochachse) und 1082 nm (B) (Rechtsachse) an verschiedenen Stellen des Papiersubstrats mit aus zwei Lumineszenzpigmenten aufgebauten Agglomeraten AB1.
Als Vergleichsbeispiel wird ein zweites Blatt hergestellt, das 0,05 Gewichtsprozent Agglomerate A1 aus dem reinen Pigment A, und 0,05 Gewichtsprozent Agglomerate B1 aus dem reinen Pigment B enthält, und ebenfalls vermessen. Eine Auftragung der erhaltenen Messpunkte ergibt den Graphen in Figur 10.
Figur 10 zeigt die relativen Lumineszenzintensitäten bei 1000 nm (A) (Rechtsachse) und 1082 nm (B) (Hochachse) an verschiedenen Stellen des Papiersubstrats mit jeweils aus einer Sorte Lumineszenzpigment aufgebauten Agglomeraten A1 und B1.
Berechnet man beispielsweise den Korrelationskoeffizienten der Datenpunkte aus Figur 9, so erhält man einen hohen Korrelationswert von 73%. Die Datenpunkte aus Figur 10 korrelieren hingegen deutlich schwächer, man erhält einen Korrelationskoeffizienten von 30%.

Bei der Durchführung einer Reihe von 100 Messungen, die bei den Blättern an zufälligen Stellen vorgenommen werden, erhält man bei dem Blatt, das aus zwei Pigmenten zusammengesetzte Agglomerate AB1 enthält, typischerweise Korrelationswerte von über 70%. Bei dem Blatt, das die mit jeweils aus einer Sorte Lumineszenzpigment aufgebauten Agglomerate (A1, B1) enthält, werden deutlich niedrigere Werte, insbesondere unter 50%, erhalten.

Die Blätter lassen sich somit anhand des Grades der Korrelation unterscheiden, obwohl sie gleiche Gewichtsanteile an beiden NIR-Lumineszenzpigmenten A und B enthalten.

Die Tatsache, dass im zweiten Fall überhaupt eine Korrelation erkennbar ist, ist hauptsächlich auf Inhomogenitäten des Papiers zurückzuführen, die die Lumineszenzintensität an einer Messstelle jeweils für beide Komponenten A und B gleichzeitig erhöhen bzw. erniedrigen. Die Inhomogenitäten des Papiers sind unter anderem von der Papierart und der Herstellungsmethode abhängig.

Vorzugsweise wird auch bei unbedrucktem Papier die im folgenden Anwendungsbeispiel 2 beschriebene Methode der Korrektur von Bedruckungseffekten durch eine zusätzliche Lumineszenzkomponente gewählt.

Anwendungsbeispiel 2: Signalkorrelation in einem bedruckten Blatt mit Korrekturkomponente

Die zwei Lumineszenzpigmente aufweisenden Agglomerate (CD2) und die zusätzliche Komponente E (nicht agglomeriert) werden der Papiermasse während der Blattherstellung so hinzugefügt, dass die Agglomerate CD2 im entstehenden Blatt mit einem Massenanteil von 0,2 Gewichtsprozent, sowie die Komponente E mit einem Massenanteil von 0,5 Gewichtsprozent homogen im Papierkörper verteilt sind. Anschließend wird das Blatt mit einem schwarzen Streifenmuster bedruckt (Streifendicke ca. 1 cm), wodurch an den bedruckten Stellen eine signifikante Lumineszenzabschwächung (auf ca. 50% des Ursprungssignals) erhalten wird.

Zum Vergleich wird ein analoges Blatt mit jeweils 0,1 Gewichtsprozent der Agglomerate C2 und D2, sowie 0,5 Gewichtsprozent der zusätzlichen Komponente E hergestellt und ebenfalls bedruckt.

Beide Blätter werden an mehreren unterschiedlichen Stellen durch Anregung mit Licht der Wellenlänge 950 nm (Größe des Messflecks etwa 0,8 mm$^2$) vermessen. Es werden jeweils die Intensitäten der Lumineszenz bei 1545 nm (C), 2040 nm (D) und 1792 nm (E) detektiert.

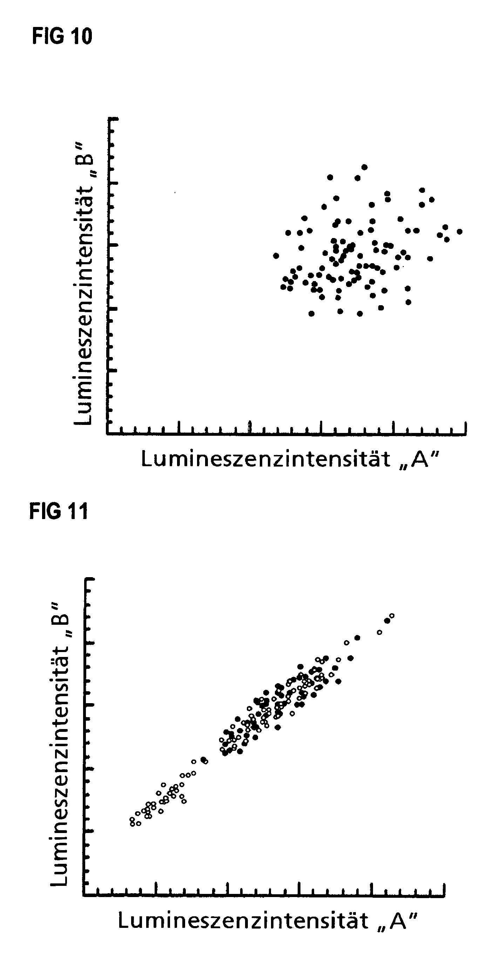

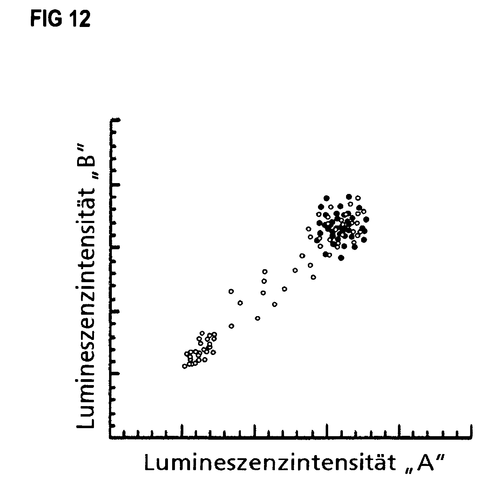

Durch die lokale Abschwächung der detektierten Lumineszenzintensität in den bedruckten Bereichen zeigt sowohl das Blatt mit den Agglomeraten CD2, als auch das Blatt mit den Agglomeraten C2 und D2 eine starke Korrelation der Signalintensitäten C und D (weisse Punkte in Figur 11 und Figur 12).

Figur 11 zeigt die relativen Lumineszenzintensitäten bei 1545 nm (C) (Rechtsachse) und 2040 nm (D) (Hochachse) an verschiedenen Stellen eines Papiersubstrats mit aus zwei Lumineszenzpigmenten aufgebauten Agglomeraten CD2 vor (weiss) und nach (schwarz) Korrektur durch die Lumineszenzintensität bei 1792 nm (E) eines zusätzlichen Lumineszenzpigments.

Figur 12 zeigt die relativen Lumineszenzintensitäten bei 1545 nm (C) (Rechtsachse) und 2040 nm (D) (Hochachse) an verschiedenen Stellen eines Papiersubstrats mit jeweils aus einer Sorte eines Lumineszenzpigments aufgebauten Agglomeraten C2 und D2 vor (weiss) und nach (schwarz) Korrektur durch die Lumineszenzintensität bei 1792 nm (E) eines zusätzlichen Lumineszenzpigments.

Da sich der Effekt der Bedruckung, genauso wie der Effekt der Inhomogenitäten der Papiermasse, auf alle drei Komponenten C, D, E gleichermaßen auswirkt, lassen sich diese Effekte durch Normierung der Signalintensitäten C, D durch die Signalintensität E eliminieren (schwarze Punkte in Figur 11 und Figur 12). Als Folge lässt sich nur noch im Blatt mit den Agglomeraten CD2 eine Korrelation feststellen, während im Blatt mit den getrennten Komponenten C2 und D2 keine Korrelation mehr festgestellt werden kann.

Somit beträgt der Korrelationskoeffizient nach der Durchführung einer Reihe von 100 Messungen, die an zufälligen Stellen im Papiersubstrat vorgenommen werden, bei dem Blatt mit Agglomeraten CD2 vor der Korrektur 0,97 und nach der Korrektur 0,87. Es herrscht also noch eine starke Korrelation zwischen C und D vor, wohingegen das Blatt mit Agglomeraten C2 und D2 vor der Korrektur einen Wert von 0,97 und nach der Korrektur einen niedrigen Wert von 0,12 aufweist.

Das in der vorliegenden Erfindung beschriebene lumineszierende Codierungsmuster ist nicht auf ein Barcode-System oder ein Codierungsraster, wie es z.B. in Fig. 2 und Fig. 7 dargestellt ist, eingeschränkt. Die in den Figuren gezeigten "Raster" wurden willkürlich gewählt, d.h. die Messstellen können mit Bezug auf ihre Größe und ihren Ort beliebig gewählt werden und müssen nicht innerhalb eines solchen Rasters liegen.

Grundsätzlich können die erfindungsgemäß verwendeten lumineszierenden Stoffe im Wertdokument selbst, insbesondere im Papiersubstrat, eingebracht sein. Zusätzlich oder alternativ können die lumineszierenden Stoffe auf dem Wertdokument aufgebracht sein (z.B. können die lumineszierenden Stoffe auf dem Papiersubstrat aufgedruckt sein). Bei dem Wertdokumentsubstrat muss es sich nicht zwangsläufig um ein Papiersubstrat handeln, es könnte auch ein Kunststoffsubstrat sein oder ein Substrat, das sowohl Papier-Bestandteile als auch Kunststoffbestandteile aufweist.

**Patentansprüche**

1. Wertdokument mit lumineszierenden, partikulären Agglomeraten, die jeweils mindestens zwei unterschiedliche, mit einer ersten bzw. einer zweiten Emissionswellenlänge emittierende, lumineszierende, feste homogene Phasen beinhalten, wobei bei einer Auswertung von Messwerten, die durch eine an verschiedenen Orten des Wertdokuments durchgeführte, ortspezifische Messung der ersten Lumineszenzintensität bei der ersten Emissionswellenlänge und der zweiten Lumineszenzintensität bei der zweiten Emissionswellenlänge erhältlich sind, eine statistische Korrelation zwischen den ersten Lumineszenzintensitäten und den zweiten Lumineszenzintensitäten vorliegt, wobei in einheitlicher Konzentration eine zusätzliche, bei einer dritten Emissionswellenlänge lumineszierende Komponente in das Wertdokument eingeführt ist, die nicht-korrelierend ist, wobei die statistische Korrelation wie folgt zu verstehen ist:

    bei der Durchführung einer Reihe von 100 Messungen, die bei den Blättern an zufälligen Stellen vorgenommen werden, erhält man bei dem Blatt, das aus zwei Pigmenten zusammengesetzte Agglomerate enthält, Korrelationswerte, nämlich Korrelationskoeffizienten nach Bravais-Pearson, von über 70%.

2. Wertdokument nach Anspruch 1, wobei die für die Auswertung herangezogenen Lumineszenzintensitäten jeweils mittels eines Algorithmus umgerechnete, korrigierte Messwerte sind.

3. Wertdokument nach einem der Ansprüche 1 oder 2, wobei die Agglomerate von der Gruppe bestehend aus Kern/Hülle-Teilchen, Pigmentagglomeraten, verkapselten Pigmentagglomeraten und von Nanopigmenten umhüllten Pigmenten gewählt sind.

4. Wertdokument nach einem der Ansprüche 1 bis 3, wobei die partikulären Agglomerate eine Korngröße D99 in einem Bereich von 1 Mikrometer bis 30 Mikrometer, bevorzugt in einem Bereich von 5 Mikrometer bis 20 Mikrometer, weiter bevorzugt in einem Bereich von 10 Mikrometer bis 20 Mikrometer und insbesondere bevorzugt in einem Bereich von 15 Mikrometer bis 20 Mikrometer, aufweisen.

5. Wertdokument nach einem der Ansprüche 1 bis 4, wobei die partikulären Agglomerate eine Korngröße D50 in einem Bereich von 1 Mikrometer bis 30 Mikrometer, bevorzugt in einem Bereich von 5 Mikrometer bis 20 Mikrometer und insbesondere bevorzugt in einem Bereich von 7,5 Mikrometer bis 20 Mikrometer, aufweisen.

6. Verfahren zur Überprüfung des Vorliegens eines Wertdokuments mit lumineszierenden, partikulären Agglomeraten, die jeweils mindestens zwei unterschiedliche, mit einer ersten bzw. einer zweiten Emissionswellenlänge emittierende, lumineszierende, feste homogene Phasen beinhalten, wobei bei einer Auswertung von Messwerten, die durch eine an verschiedenen Orten des Wertdokuments durchgeführte, ortspezifische Messung der ersten Lumineszenzintensität bei der ersten Emissionswellenlänge und der zweiten Lumineszenzintensität bei der zweiten Emissionswellenlänge erhältlich sind, eine statistische Korrelation zwischen den ersten Lumineszenzintensitäten und den zweiten Lumineszenzintensitäten vorliegt, wobei die statistische Korrelation wie folgt zu verstehen ist:

    bei der Durchführung einer Reihe von 100 Messungen, die bei den Blättern an zufälligen Stellen vorgenommen werden, erhält man bei dem Blatt, das aus zwei Pigmenten zusammengesetzte Agglomerate enthält, Korrelationswerte, nämlich Korrelationskoeffizienten nach Bravais-Pearson, von über 70%; wobei das Verfahren die folgenden Schritte umfasst:

    a) das Anregen der lumineszierenden Stoffe zur Emission;
    b) das ortsaufgelöste und wellenlängenselektive Erfassen von Messwerten für die von den lumineszierenden Stoffen emittierte Strahlung, wobei für jede der ersten und der zweiten Emissionswellenlänge Messwertpaare Emissionswellenlänge/Ort erzeugt werden, um somit erste Lumineszenzintensitäten bei der ersten Emissionswellenlänge und zweite Lumineszenzintensitäten bei der zweiten Emissionswellenlänge zu gewinnen;
    c) das Überprüfen, ob eine statistische Korrelation zwischen den ersten Lumineszenzintensitäten und den zweiten Lumineszenzintensitäten vorliegt.

7. Verfahren nach Anspruch 6, wobei in einheitlicher Konzentration eine zusätzliche, bei einer dritten Emissionswellenlänge lumineszierende Komponente in das Wertdokument eingeführt ist, die nicht-korrelierend ist, und die ersten Lumineszenzintensitäten bei der ersten Emissionswellenlänge und die zweiten Lumineszenzintensitäten bei der zweiten Emissionswellenlänge durch die zusätzliche, in einheitlicher Konzentration in das Wertdokument eingeführte und bei einer dritten Emissionswellenlänge lumineszierende, nicht-korrelierende Komponente normiert werden.

8. Verfahren nach Anspruch 6 oder 7, wobei die für die Auswertung herangezogenen Lumineszenzintensitäten jeweils mittels eines Algorithmus umgerechnete, korrigierte Messwerte sind.

9. Verfahren nach einem der Ansprüche 6 bis 8, wobei die Agglomerate von der Gruppe bestehend aus Kern/Hülle-Teilchen, Pigmentagglomeraten, verkapselten Pigmentagglomeraten und von Nanopigmenten umhüllten Pigmenten gewählt sind.

10. Verfahren nach einem der Ansprüche 6 bis 9, wobei die partikulären Agglomerate eine Korngröße D99 in einem Bereich von 1 Mikrometer bis 30 Mikrometer, bevorzugt in einem Bereich von 5 Mikrometer bis 20 Mikrometer, weiter bevorzugt in einem Bereich von 10 Mikrometer bis 20 Mikrometer und insbesondere bevorzugt in einem Bereich von 15 Mikrometer bis 20 Mikrometer, aufweisen.

11. Verfahren nach einem der Ansprüche 6 bis 10, wobei die partikulären Agglomerate eine Korngröße D50 in einem Bereich von 1 Mikrometer bis 30 Mikrometer, bevorzugt in einem Bereich von 5 Mikrometer bis 20 Mikrometer und insbesondere bevorzugt in einem Bereich von 7,5 Mikrometer bis 20 Mikrometer, aufweisen.

12. Wertdokumentsystem mit zumindest ersten Wertdokumenten und zweiten Wertdokumenten, wobei die ersten Wertdokumente jeweils gemäß einem der Ansprüche 1 bis 5 gewählt sind und die ersten Wertdokumente von den zweiten Wertdokumenten anhand der statistischen Korrelation ihrer Lumineszenzintensitäten unterscheidbar sind.

13. Wertdokumentsystem nach Anspruch 12, wobei die zweiten Wertdokumente keine statistische Korrelation aufweisen.

14. Wertdokumentsystem nach Anspruch 12 mit ersten Wertdokumenten, zweiten Wertdokumenten, dritten Wertdokumenten und vierten Wertdokumenten, von denen die dritten Wertdokumente und die vierten Wertdokumente lediglich optional sind, nämlich:

a) erste Wertdokumente, die jeweils ein lumineszierendes Gemisch bestehend aus lumineszierenden, partikulären Agglomeraten (A+B) und lumineszierenden Partikeln C aufweisen, wobei
die partikulären Agglomerate (A+B) jeweils zwei unterschiedliche, mit einer ersten bzw. einer zweiten Emissionswellenlänge emittierende, lumineszierende, feste homogene Phasen A und B beinhalten und die lumineszierenden Partikel C jeweils aus einer bei einer dritten Emissionswellenlänge emittierenden, festen homogenen Phase C bestehen, und
bei einer Auswertung von Messwerten, die durch eine an verschiedenen Orten eines einzelnen Wertdokuments durchgeführte, ortspezifische Messung der ersten Lumineszenzintensität bei der ersten Emissionswellenlänge, der zweiten Lumineszenzintensität bei der zweiten Emissionswellenlänge und der dritten Lumineszenzintensität bei der dritten Emissionswellenlänge erhältlich sind, lediglich zwischen den ersten Lumineszenzintensitäten und den zweiten Lumineszenzintensitäten eine statistische Korrelation vorliegt;
b) zweite Wertdokumente, die jeweils ein lumineszierendes Gemisch bestehend aus lumineszierenden, partikulären Agglomeraten (B+C) und lumineszierenden Partikeln A aufweisen, wobei
die partikulären Agglomerate (B+C) jeweils die zwei unterschiedlichen, mit der zweiten bzw. der dritten Emissionswellenlänge emittierenden, lumineszierenden, festen homogenen Phasen B und C beinhalten und die lumineszierenden Partikel A jeweils aus der bei der ersten Emissionswellenlänge emittierenden, festen homogenen Phase A bestehen, und
bei einer Auswertung von Messwerten, die durch eine an verschiedenen Orten eines einzelnen Wertdokuments durchgeführte, ortspezifische Messung der ersten Lumineszenzintensität bei der ersten Emissionswellenlänge, der zweiten Lumineszenzintensität bei der zweiten Emissionswellenlänge und der dritten Lumineszenzintensität bei der dritten Emissionswellenlänge erhältlich sind, lediglich zwischen den zweiten Lumineszenzintensitäten und den dritten Lumineszenzintensitäten eine statistische Korrelation vorliegt;
optional c) dritte Wertdokumente, die jeweils ein lumineszierendes Gemisch bestehend aus lumineszierenden, partikulären Agglomeraten (A+C) und lumineszierenden Partikeln B aufweisen, wobei
die partikulären Agglomerate (A+C) jeweils die zwei unterschiedlichen, mit der ersten bzw. der dritten Emissionswellenlänge emittierenden, lumineszierenden, festen homogenen Phasen A und C beinhalten und die lumineszierenden Partikel B jeweils aus der bei der zweiten Emissionswellenlänge emittierenden, festen homogenen Phase B bestehen, und
bei einer Auswertung von Messwerten, die durch eine an verschiedenen Orten eines einzelnen Wertdokuments durchgeführte, ortspezifische Messung der ersten Lumineszenzintensität bei der ersten Emissionswellenlänge, der zweiten Lumineszenzintensität bei der zweiten Emissionswellenlänge und der dritten Lumineszenzintensität bei der dritten Emissionswellenlänge erhältlich sind, lediglich zwischen den ersten Lumineszenzintensitäten und den dritten Lumineszenzintensitäten eine statistische Korrelation vorliegt; und

optional d) vierte Wertdokumente, die jeweils lumineszierende, partikuläre Agglomerate (A+B+C) aufweisen, wobei

die partikulären Agglomerate (A+B+C) jeweils die drei unterschiedlichen, mit der ersten bzw. der zweiten bzw. der dritten Emissionswellenlänge emittierenden, lumineszierenden, festen homogenen Phasen A, B und C beinhalten und

bei einer Auswertung von Messwerten, die durch eine an verschiedenen Orten eines einzelnen Wertdokuments durchgeführte, ortspezifische Messung der ersten Lumineszenzintensität bei der ersten Emissionswellenlänge, der zweiten Lumineszenzintensität bei der zweiten Emissionswellenlänge und der dritten Lumineszenzintensität bei der dritten Emissionswellenlänge erhältlich sind, eine statistische Korrelation zwischen den ersten Lumineszenzintensitäten, den zweiten Lumineszenzintensitäten und den dritten Lumineszenzintensitäten vorliegt.

**Claims**

1. A value document having luminescent, particulate agglomerates which respectively include at least two different, luminescent, solid homogeneous phases emitting at a first and a second emission wavelength, respectively, wherein upon an evaluation of measurement values that are obtainable by a measurement of the first luminescence intensity at the first emission wavelength and of the second luminescence intensity at the second emission wavelength, said measurement being location-specific and carried out at different locations of the value document, a statistical correlation is present between the first luminescence intensities and the second luminescence intensities, wherein, in uniform concentration, an additional component luminescing at a third emission wavelength is introduced into the value document, said component being non-correlating, wherein the statistical correlation is to be understood as follows:

    when performing a series of 100 measurements which are done on the sheets at random places, one obtains correlation values, namely, correlation coefficients according to Bravais-Pearson, of over 70% for the sheet containing agglomerates composed of two pigments.

2. The value document according to claim 1, wherein the luminescence intensities used for the evaluation are, respectively, corrected measurement values converted by means of an algorithm.

3. The value document according to either of claims 1 and 2, wherein the agglomerates are chosen from the group consisting of core-shell particles, pigment agglomerates, encapsulated pigment agglomerates and pigments encased by nanopigments.

4. The value document according to any of claims 1 to 3, wherein the particulate agglomerates have a grain size D99 in a range of 1 micrometer to 30 micrometers, preferably in a range of 5 micrometers to 20 micrometers, further preferably in a range of 10 micrometers to 20 micrometers, and particularly preferably in a range of 15 micrometers to 20 micrometers.

5. The value document according to any of claims 1 to 4, wherein the particulate agglomerates have a grain size D50 in a range of 1 micrometer to 30 micrometers, preferably in a range of 5 micrometers to 20 micrometers, and particularly preferably in a range of 7.5 micrometers to 20 micrometers.

6. A method for checking the presence of a value document having luminescent, particulate agglomerates which respectively include at least two different, luminescent, solid homogeneous phases emitting at a first and a second emission wavelength, respectively, wherein upon an evaluation of measurement values that are obtainable by a measurement of the first luminescence intensity at the first emission wavelength and of the second luminescence intensity at the second emission wavelength, said measurement being location-specific and carried out at different locations of the value document, a statistical correlation is present between the first luminescence intensities and the second luminescence intensities, wherein the statistical correlation is to be understood as follows:

    when performing a series of 100 measurements which are done on the sheets at random places, one obtains correlation values, namely, correlation coefficients according to Bravais-Pearson, of over 70% for the sheet containing agglomerates composed of two pigments; wherein the method comprises the following steps:

a) exciting the luminescent substances to emission;
b) capturing measurement values in a location-resolved and wavelength-selective manner for the radiation emitted by the luminescent substances, there being produced for each of the first and the second emission wavelength measurement-value pairs involving emission wavelength and location, to thereby obtain first luminescence intensities at the first emission wavelength and second luminescence intensities at the second emission wavelength;
c) checking whether a statistical correlation is present between the first luminescence intensities and the second luminescence intensities.

7. The method according to claim 6, wherein, in uniform concentration, an additional component luminescing at a third emission wavelength is introduced into the value document, said component being non-correlating, and the first luminescence intensities at the first emission wavelength and the second luminescence intensities at the second emission wavelength being normalized by the additional, non-correlating component luminescing at a third emission wavelength and introduced into the value document in uniform concentration.

8. The method according to claim 6 or 7, wherein the luminescence intensities used for the evaluation are, respectively, corrected measurement values converted by means of an algorithm.

9. The method according to any of claims 6 to 8, wherein the agglomerates are chosen from the group consisting of core-shell particles, pigment agglomerates, encapsulated pigment agglomerates and pigments encased by nanopigments.

10. The method according to any of claims 6 to 9, wherein the particulate agglomerates have a grain size D99 in a range of 1 micrometer to 30 micrometers, preferably in a range of 5 micrometers to 20 micrometers, further preferably in a range of 10 micrometers to 20 micrometers, and in particular preferably in a range of 15 micrometers to 20 micrometers.

11. The method according to any of claims 6 to 10, wherein the particulate agglomerates have a grain size D50 in a range of 1 micrometer to 30 micrometers, preferably in a range of 5 micrometers to 20 micrometers, and in particular preferably in a range of 7.5 micrometers to 20 micrometers.

12. A value-document system having at least first value documents and second value documents, wherein the first value documents are respectively chosen according to any of claims 1 to 5 and the first value documents are distinguishable from the second value documents by the statistical correlation of their luminescence intensities.

13. The value-document system according to claim 12, wherein the second value documents have no statistical correlation.

14. The value-document system according to claim 12 having first value documents, second value documents, third value documents and fourth value documents, of which the third value documents and the fourth value documents are only optional, namely:

a) first value documents which respectively have a luminescent mixture consisting of luminescent, particulate agglomerates (A+B) and luminescent particles C, wherein
the particulate agglomerates (A+B) respectively include two different, luminescent, solid homogeneous phases A and B emitting at a first and a second emission wavelength, respectively, and the luminescent particles C respectively consist of a solid homogeneous phase C emitting at a third emission wavelength, and
upon an evaluation of measurement values that are obtainable by a measurement of the first luminescence intensity at the first emission wavelength, of the second luminescence intensity at the second emission wavelength and of the third luminescence intensity at the third emission wavelength, said measurement being location-specific and carried out at different locations of an individual value document, a statistical correlation is present only between the first luminescence intensities and the second luminescence intensities;
b) second value documents which respectively have a luminescent mixture consisting of luminescent, particulate agglomerates (B+C) and luminescent particles A, wherein
the particulate agglomerates (B+C) respectively include the two different, luminescent, solid homogeneous phases B and C emitting at the second and the third emission wavelength, respectively, and the luminescent particles A respectively consist of the solid homogeneous phase A emitting at the first emission wavelength, and
upon an evaluation of measurement values that are obtainable by a measurement of the first luminescence intensity at the first emission wavelength, of the second luminescence intensity at the second emission wavelength and of the third luminescence intensity at the third emission wavelength, said measurement being location-specific and carried out at different locations of an individual value document, a statistical correlation is present only between the second luminescence intensities and the third luminescence intensities;

optionally c) third value documents which respectively have a luminescent mixture consisting of luminescent, particulate agglomerates (A+C) and luminescent particles B, wherein

the particulate agglomerates (A+C) respectively include the two different, luminescent, solid homogeneous phases A and C emitting at the first and the third emission wavelength, respectively, and the luminescent particles B respectively consist of the solid homogeneous phase B emitting at the second emission wavelength, and

upon an evaluation of measurement values that are obtainable by a measurement of the first luminescence intensity at the first emission wavelength, of the second luminescence intensity at the second emission wavelength and of the third luminescence intensity at the third emission wavelength, said measurement being location-specific and carried out at different locations of an individual value document, a statistical correlation is present only between the first luminescence intensities and the third luminescence intensities; and

optionally d) fourth value documents which respectively have luminescent, particulate agglomerates (A+B+C), wherein

the particulate agglomerates (A+B+C) respectively include the three different, luminescent, solid homogeneous phases A, B and C emitting at the first and the second and the third emission wavelength, respectively, and upon an evaluation of measurement values that are obtainable by a measurement of the first luminescence intensity at the first emission wavelength, of the second luminescence intensity at the second emission wavelength and of the third luminescence intensity at the third emission wavelength, said measurement being location-specific and carried out at different locations of an individual value document, a statistical correlation is present between the first luminescence intensities, the second luminescence intensities and the third luminescence intensities.

## Revendications

1. Document de valeur comportant des agglomérats de particules luminescents qui comprennent respectivement au moins deux phases luminescentes solides homogènes différentes émettant sous une première ou sous une deuxième longueur d'onde d'émission, cependant que, lors d'une évaluation de valeurs de mesure pouvant être obtenues par une mesure localement spécifique, réalisée à différents endroits du document de valeur, de la première intensité de luminescence sous la première longueur d'onde d'émission et de la deuxième intensité de luminescence sous la deuxième longueur d'onde d'émission, il y a une corrélation statistique entre les premières intensités de luminescence et les deuxièmes intensités de luminescence, cependant que, en concentration uniforme, une composante supplémentaire sans corrélation, luminescente sous une troisième longueur d'onde d'émission, est introduite dans le document de valeur, la corrélation statistique devant d'entendre comme suit:

   lors de la réalisation d'une série de 100 mesures effectuées sur les feuilles à des endroits aléatoires, on obtient dans le cas de la feuille comprenant des agglomérats composés de deux pigments des valeurs de corrélation, à savoir des coefficients de corrélation de Bravais-Pearson, supérieurs à 70%.

2. Document de valeur selon la revendication 1, les intensités de luminescence utilisées pour l'évaluation étant respectivement des valeurs de mesure corrigées converties au moyen d'un algorithme.

3. Document de valeur selon une des revendications 1 ou 2, les agglomérats étant choisis dans le groupe constitué par des particules noyau/coque, des agglomérats de pigments, des agglomérats encapsulés de pigments et des pigments enrobés de nanopigments.

4. Document de valeur selon une des revendications de 1 à 3, les agglomérats de particules présentant une taille de grain D99 située dans une plage de 1 micromètre à 30 micromètres, de préférence dans une plage de 5 micromètres à 20 micromètres, encore de préférence dans une plage de 10 micromètres à 20 micromètres, et particulièrement de préférence dans une plage de 15 micromètres à 20 micromètres.

5. Document de valeur selon une des revendications de 1 à 4, les agglomérats de particules présentant une taille de grain D50 située dans une plage de 1 micromètre à 30 micromètres, de préférence dans une plage de 5 micromètres à 20 micromètres et particulièrement de préférence dans une plage de 7,5 micromètres à 20 micromètres.

**6.** Procédé de vérification de la présence d'un document de valeur comportant des agglomérats de particules luminescents qui comprennent respectivement au moins deux phases luminescentes solides homogènes différentes émettant sous une première ou sous une deuxième longueur d'onde d'émission, cependant que, lors d'une évaluation de valeurs de mesure pouvant être obtenues par une mesure localement spécifique, réalisée à différents endroits du document de valeur, de la première intensité de luminescence sous la première longueur d'onde d'émission et de la deuxième intensité de luminescence sous la deuxième longueur d'onde d'émission, il y a une corrélation statistique entre les premières intensités de luminescence et les deuxièmes intensités de luminescence, la corrélation statistique devant d'entendre comme suit:

lors de la réalisation d'une série de 100 mesures effectuées sur les feuilles à des endroits aléatoires, on obtient dans le cas de la feuille comprenant des agglomérats composés de deux pigments des valeurs de corrélation, à savoir des coefficients de corrélation de Bravais-Pearson, supérieurs à 70%; le procédé comprenant les étapes suivantes:

a) l'excitation des substances luminescentes en émission;
b) la saisie, à résolution locale et sélective en longueur d'onde, de valeurs de mesure pour le rayonnement émis par les substances luminescentes, cependant que, pour chacune de la première et de la deuxième longueur d'onde, des paires de valeurs de mesure longueur d'onde d'émission/lieu sont générées, afin de, de cette façon, recueillir des premières intensités de luminescence sous la première longueur d'onde d'émission et des deuxièmes intensités de luminescence sous la deuxième longueur d'onde d'émission;
c) la vérification révélant s'il y a une corrélation statistique entre les premières intensités de luminescence et les deuxièmes intensités de luminescence.

**7.** Procédé selon la revendication 6, cependant que, en concentration uniforme, une composante supplémentaire sans corrélation, luminescente sous une troisième longueur d'onde d'émission, est introduite dans le document de valeur, et les premières intensités de luminescence sous la première longueur d'onde d'émission et les deuxièmes intensités de luminescence sous la deuxième longueur d'onde d'émission sont normées par la composante supplémentaire sans corrélation introduite dans le document de valeur en concentration uniforme et luminescente sous une troisième longueur d'onde d'émission.

**8.** Procédé selon la revendication 6 ou 7, cependant que des intensités de luminescence utilisées pour l'évaluation sont respectivement des valeurs de mesure corrigées converties au moyen d'un algorithme.

**9.** Procédé selon une des revendications de 6 à 8, les agglomérats étant choisis dans le groupe constitué par des particules noyau/coque, des agglomérats de pigments, des agglomérats encapsulés de pigments et des pigments enrobés de nanopigments.

**10.** Procédé selon une des revendications de 6 à 9, les agglomérats de particules présentant une taille de grain D99 située dans une plage de 1 micromètre à 30 micromètres, de préférence dans une plage de 5 micromètres à 20 micromètres, encore de préférence dans une plage de 10 micromètres à 20 micromètres, et particulièrement de préférence dans une plage de 15 micromètres à 20 micromètres.

**11.** Procédé selon une des revendications de 6 à 10, les agglomérats de particules présentant une taille de grain D50 située dans une plage de 1 micromètre à 30 micromètres, de préférence dans une plage de 5 micromètres à 20 micromètres et particulièrement de préférence dans une plage de 7,5 micromètres à 20 micromètres.

**12.** Système de documents de valeur comprenant au moins de premiers documents de valeur et de deuxièmes documents de valeur, les premiers documents de valeur étant respectivement choisis conformément à une des revendications de 1 à 5 et les premiers documents de valeur étant distinguables des deuxièmes documents de valeur à l'aide de la corrélation statistique entre leurs intensités de luminescence.

**13.** Système de documents de valeur selon la revendication 12, les deuxièmes documents de valeur se présentant pas de corrélation statistique.

**14.** Système de documents de valeur selon la revendication 12 comprenant des premiers documents de valeur, des deuxièmes documents de valeur, des troisièmes documents de valeur et des quatrièmes documents de valeur, dont les de troisièmes documents de valeur et les quatrièmes documents de valeur sont seulement optionnels, à savoir:

a) des premiers documents de valeur qui comportent respectivement un mélange luminescent constitué d'agglomérats (A+B) de particules luminescents et de particules C luminescentes, cependant que

les agglomérats (A+B) de particules comprennent respectivement au moins deux phases A et B luminescentes solides homogènes différentes émettant sous une première ou sous une deuxième longueur d'onde d'émission, et les particules luminescentes C sont respectivement constituées d'une phase C luminescente solide homogène émettant sous une troisième longueur d'onde d'émission, et

lors d'une évaluation de valeurs de mesure pouvant être obtenues par une mesure localement spécifique, réalisée à différents endroits d'un document de valeur distinct, de la première intensité de luminescence sous la première longueur d'onde d'émission, de la deuxième intensité de luminescence sous la deuxième longueur d'onde d'émission, et de la troisième intensité de luminescence sous la troisième longueur d'onde d'émission, ce n'est qu'entre les premières intensités de luminescence et les deuxièmes intensités de luminescence qu'il y a une corrélation statistique;

b) des deuxièmes documents de valeur qui comportent respectivement un mélange luminescent constitué d'agglomérats (B+C) de particules luminescents et de particules A luminescentes, cependant que

les agglomérats (B+C) de particules contiennent respectivement les deux phases B et C luminescentes solides homogènes différentes émettant sous la deuxième ou sous la troisième longueur d'onde d'émission, et les particules luminescentes A sont respectivement constituées de la phase A luminescente solide homogène émettant sous la première longueur d'onde d'émission, et

lors d'une évaluation de valeurs de mesure pouvant être obtenues par une mesure localement spécifique, réalisée à différents endroits d'un document de valeur distinct, de la première intensité de luminescence sous la première longueur d'onde d'émission, de la deuxième intensité de luminescence sous la deuxième longueur d'onde d'émission, et de la troisième intensité de luminescence sous la troisième longueur d'onde d'émission, ce n'est qu'entre les deuxièmes intensités de luminescence et les troisièmes intensités de luminescence qu'il y a une corrélation statistique;

en option, c) des troisièmes documents de valeur qui comportent respectivement un mélange luminescent constitué d'agglomérats (A+C) de particules luminescents et de particules B luminescentes, cependant que

les agglomérats (A+C) de particules contiennent respectivement les deux phases A et C luminescentes solides homogènes différentes émettant sous la première ou sous la troisième longueur d'onde d'émission, et les particules luminescentes B sont respectivement constituées de la phase B solide homogène émettant sous la deuxième longueur d'onde d'émission, et

lors d'une évaluation de valeurs de mesure pouvant être obtenues par une mesure localement spécifique, réalisée à différents endroits d'un document de valeur distinct, de la première intensité de luminescence sous la première longueur d'onde d'émission, de la deuxième intensité de luminescence sous la deuxième longueur d'onde d'émission, et de la troisième intensité de luminescence sous la troisième longueur d'onde d'émission, ce n'est qu'entre les premières intensités de luminescence et les troisièmes intensités de luminescence qu'il y a une corrélation statistique; et

en option, d) des quatrièmes documents de valeur qui comportent respectivement des agglomérats (A+B+C) de particules luminescents, cependant que

les agglomérats (A+B+C) de particules contiennent respectivement les trois phases A, B et C luminescentes solides homogènes différentes émettant sous la première ou sous la deuxième ou sous la troisième longueur d'onde d'émission, et

lors d'une évaluation de valeurs de mesure pouvant être obtenues par une mesure localement spécifique, réalisée à différents endroits d'un document de valeur distinct, de la première intensité de luminescence sous la première longueur d'onde d'émission, de la deuxième intensité de luminescence sous la deuxième longueur d'onde d'émission, et de la troisième intensité de luminescence sous la troisième longueur d'onde d'émission, il y a une corrélation statistique entre les premières intensités de luminescence, les deuxièmes intensités de luminescence et les troisièmes intensités de luminescence.

**FIG 1**

**FIG 2**

| Signal A | Signal B | Signal A | Signal B | Signal A | Signal B |

**FIG 3**

**FIG 4**

**FIG 5**

1) Rohdaten    2) Normierung    3) Drehung um 45°    4) Quantilen

**FIG 6**

**FIG 7**

**FIG 8**

(a)　　　(b)　　　(c)　　　(d)　　　(e)

**FIG 9**

**FIG 10**

Lumineszenzintensität „A"

**FIG 11**

Lumineszenzintensität „A"

**FIG 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005047609 A1

- WO 2006072380 A2

**In der Beschreibung aufgeführte Nicht-Patentliteratur**

- **FACHBUCH W. H. PRESS.** Numerical Recipes in C - The Art of Scientific Computing. Cambridge University Press, 1997, 628-645

- **R. STORM.** Wahrscheinlichkeitsrechnung, mathematische Statistik und statistische Qualitätskontrolle. Carl Hanser Verlag, 2007, 246-285